# FASCICULE DE BREVET EUROPEEN

(11) **EP 2 147 441 B1**
(45) Date de publication et mention de la délivrance du brevet: **26.12.2012**
(21) Numéro de dépôt: 08788005.0
(22) Date de dépôt: 14.03.2008
(51) Int. Cl.: G21C 17/10, G21D 3/00

(54) **PROCÉDÉ DE DÉTERMINATION DE LA DISTRIBUTION DE PUISSANCE VOLUMIQUE DU COEUR D'UN RÉACTEUR NUCLÉAIRE**
VERFAHREN ZUR BESTIMMUNG DER VOLUMETRISCHEN LEISTUNGSVERTEILUNG EINES ATOMREAKTORKERNS
METHOD FOR DETERMINING THE VOLUMETRIC POWER DISTRIBUTION OF THE CORE OF A NUCLEAR REACTOR

(30) Priorité: 19.03.2007 FR 0701965
(43) Date de publication de la demande: 27.01.2010
(73) Titulaire: Areva NP, 92400 Courbevoie (FR)
(72) Inventeur: GAUTIER, Antoine, F-75015 Paris (FR); DUREY, David, F-78000 Versailles (FR)
(74) Mandataire: Lebkiri, Alexandre
(86) Numéro de dépôt international: PCT/FR2008/050446
(87) Numéro de publication internationale: WO 2008/132365

(56) Documents cités:
- EP-A- 0 241 301
- EP-A- 1 197 970
- US-A- 4 774 049

## Description

La présente invention concerne un procédé de détermination de la distribution de puissance volumique du coeur d'un réacteur nucléaire. Elle a également pour objet un procédé de surveillance d'au moins un paramètre limitatif du fonctionnement normal du coeur d'un réacteur nucléaire. L'invention est plus particulièrement adaptée aux réacteurs nucléaires à eau pressurisée.

En fonctionnement normal, le coeur d'un réacteur nucléaire doit respecter certaines conditions qui garantissent le respect des critères de sûreté en cas d'accident. Ces conditions (dites de catégorie 1) correspondent aux situations initiales prises dans les études de sûreté ; les dépasser en fonctionnement normal remet donc en cause la démonstration de sûreté. La vérification en continu du respect des limites du fonctionnement normal définit la fonction de "surveillance des conditions pré-accidentelles du coeur".

Ces conditions sont formulées à partir de paramètres représentatifs d'une sollicitation particulière des crayons de combustible constitutifs du coeur du réacteur nucléaire. À titre d'exemple peuvent être cités des paramètres simples comme le niveau de puissance du coeur ou les facteurs représentatifs de la forme de la distribution de puissance (ΔI, FΔH etc.) mais aussi des paramètres plus élaborés comme le Rapport de Flux Thermique Critique (associé au phénomène d'ébullition critique) ou la puissance linéique (associée au phénomène de fusion du combustible). La surveillance des conditions pré-accidentelles du coeur passe donc par le calcul d'un ou plusieurs de ces paramètres et par la comparaison à un seuil prédéfini, issu des études de sûreté. Lorsque les paramètres choisis pour définir la fonction de surveillance sont simples, des hypothèses pénalisantes doivent être prises par ailleurs pour couvrir le nombre important de situations pré-accidentelles correspondant à une valeur limite de ces paramètres. La compatibilité de ces hypothèses pénalisantes avec le respect des critères de sûreté dans les études d'accident impose de réduire le domaine de fonctionnement normal du coeur du réacteur. Il apparaît donc qu'un raffinement de la fonction de surveillance, c'est-à-dire l'utilisation de paramètres plus élaborés pour définir les limites du fonctionnement normal du coeur du réacteur, permet une extension du domaine de fonctionnement normal du coeur du réacteur et donc un gain en exploitation.

Le pendant du raffinement de la fonction de surveillance est la nécessité de disposer en ligne d'un procédé d'évaluation du paramètre élaboré sur lequel elle est fondée. Or cette évaluation nécessite le plus souvent d'accéder à une image de la répartition de la puissance produite dans le coeur du réacteur nucléaire. Là encore, plus les moyens utilisés pour accéder à cette image de la répartition de la puissance dans le coeur sont simples, plus les conservatismes associés sont importants et plus le domaine de fonctionnement normal du coeur du réacteur est amputé. La plupart des procédés utilisés aujourd'hui pour surveiller les limites du fonctionnement normal du coeur d'un réacteur nucléaire reconstituent une image de la répartition de puissance dans le coeur en combinant une image radiale en deux dimensions et une image axiale en une dimension.

On connaît également des procédés de reconstitution de la répartition de puissance dans le coeur en trois dimensions.

Toutefois ces procédés nécessitent l'ajout d'instrumentation complémentaire dans le coeur.

Des exemples connus de l'art antérieure sont décrit dans les documents US4774049, qui divulgue un procédé de détermination de la distribution de puissance du coeur d'un réacteur nucléaire en utilisant une méthode analytique ajustée périodiquement avec des mesures délivrées par des détecteurs de mesure de flux neutronique disposes a l'extérieur de la cuve du réacteur et des sondes de mesure de température, et EP1197970, qui divulgue un procédé de détermination de la distribution de puissance du coeur d'un réacteur nucléaire en utilisant un code de calcul neutronique de type BEACON ajusté par des mesures de la température du caloporteur à la sortie des assemblages obtenues a l'aide d'un ensemble de thermocouples.

Dans ce contexte, la présente invention a pour but de pallier les inconvénients précités et vise à fournir un procédé de détermination de la distribution de puissance volumique du coeur, performant et ne nécessitant aucun ajout d'instrumentation complémentaire.

A cette fin, l'invention propose un procédé de détermination de la distribution de puissance volumique du coeur d'un réacteur nucléaire mis en oeuvre par un dispositif programmé, ledit coeur comprenant une pluralité d'assemblages combustible en utilisant un ensemble de détecteurs de mesure de flux neutronique disposés à l'extérieur de la cuve du réacteur et un ensemble de sondes de mesure de la température du caloporteur à la sortie desdits assemblages combustible, ledit procédé comportant les étapes suivantes :
- détermination, au pas temps tᵢ, d'une première distribution de puissance volumique en utilisant un code de calcul neutronique résolvant instantanément l'équation de la diffusion et actualisant le bilan isotopique du coeur au cours de l'épuisement du combustible, à partir de valeurs de paramètres de fonctionnement du réacteur,
- détermination, au pas de temps tᵢ, d'une nouvelle distribution de puissance volumique par ajustement de ladite première distribution de puissance volumique avec des mesures délivrées par lesdits détecteurs de mesure de flux neutronique disposés à l'extérieur de la cuve du réacteur et lesdites sondes de mesure de température.
- contrôle continu dudit calcul neutronique, ledit contrôle comprenant les étapes suivantes :
   o calcul, au pas de temps tᵢ, de la distribution de la puissance volumique courante du coeur à partir de valeurs de paramètres caractérisant le fonctionnement courant du réacteur,
   o calcul, au pas de temps tᵢ, d'une nouvelle distribution de puissance volumique après ajustement d'un ou plusieurs paramètre(s) caractérisant le fonctionnement courant du réacteur pour minimiser l'écart entre le calcul et la mesure du déséquilibre axial de puissance moyenné sur un ensemble d'assemblages en périphérie du coeur,
   o utilisation de la nouvelle distribution de puissance issue du calcul précédent, comme condition initiale du calcul neutronique au pas de temps suivant tᵢ₊₁.

On entend par « instantanément » un calcul neutronique réalisé chaque pas de temps avec un pas de temps inférieur à une minute (de l'ordre de 30 secondes).

Grâce à l'invention, on peut accéder à la répartition de puissance dans le coeur à partir d'une information en trois dimensions fournie par un calcul neutronique opéré en ligne. Cette information est corrigée par les mesures issues de l'instrumentation existante (thermocouples et sondes disposées à l'extérieur de la cuve du réacteur, dites excore) sur les réacteurs à eau pressurisée pour rendre compte de toutes les spécificités du coeur au moment du calcul. Le procédé ne nécessite aucune instrumentation additionnelle. Le résultat de cette correction est une image en trois dimensions de la distribution de puissance courante du coeur qui sert de base à la détermination de paramètres élaborés, limitatifs du fonctionnement normal (par exemple le Rapport de Flux Thermique Critique, dit RFTC, et la puissance linéique).

Ainsi, parce qu'il réalise un calcul neutronique en trois dimensions de la répartition de la puissance courante du coeur d'un réacteur nucléaire, parce qu'il permet de combiner à ce calcul en trois dimensions l'information de mesure fournie en continu par l'instrumentation existante et parce qu'il fonde sur le résultat de cette combinaison le calcul d'un paramètre limitatif du fonctionnement normal du coeur du réacteur, et ce, sur le site du réacteur et en un temps compatible avec les exigences de la fonction de surveillance du coeur en ligne, le procédé selon l'invention permet de mettre en oeuvre, avec un impact minimal sur l'équipement de la tranche nucléaire, une surveillance précise et performante des conditions pré-accidentelles du coeur du réacteur et donc de libérer des gains utilisables pour une exploitation optimisée de la tranche nucléaire.

L'objectif du contrôle continu du calcul neutronique est d'optimiser la représentation par le code neutronique de phénomènes transitoires ayant un impact direct sur la distribution de puissance du coeur.

Le procédé selon l'invention peut également présenter une ou plusieurs des caractéristiques ci-dessous, considérées individuellement ou selon toutes les combinaisons techniquement possibles.

Selon un mode de réalisation préférentielle, l'étape de détermination d'une nouvelle distribution de puissance comprend les étapes suivantes :
- une première étape d'ajustement de la première distribution de puissance calculée, l'ajustement étant réalisé par une fonction mathématique minimisant les écarts entre la composante axiale de la distribution de puissance calculée et les mesures délivrées par les détecteurs « excore » de mesure de flux neutronique disposés à l'extérieur de la cuve,
- une deuxième étape d'ajustement de la première distribution de puissance calculée, l'ajustement étant réalisé par une fonction mathématique minimisant les écarts entre la composante radiale de la distribution de puissance calculée et les mesures délivrées par les sondes de mesure de température.

Préférentiellement, le procédé de reconstruction selon l'invention comporte une étape de correction périodique du modèle de coeur à la base du code de calcul neutronique, cette correction périodique comprenant une étape de modification des paramètres intrinsèques au modèle de coeur pour minimiser les écarts entre la distribution de puissance volumique calculée par le code neutronique et la distribution de puissance volumique déduite des mesures fournies par des détecteurs de mesure de flux neutronique à l'intérieur du coeur du réacteur, dites sondes incore.

La présente invention a également pour objet un procédé de surveillance d'au moins un paramètre limitatif du fonctionnement normal du coeur d'un réacteur nucléaire comportant les étapes suivantes :
- Mise en oeuvre du procédé de détermination de la distribution de puissance volumique dudit coeur selon l'invention,
- Calcul d'au moins un paramètre limitatif du fonctionnement normal du coeur du réacteur à partir de cette distribution de puissance volumique du coeur,
- Calcul de l'écart du paramètre calculé par rapport à un seuil prédéterminé.

Ainsi, la distribution de puissance reconstruite par le procédé selon l'invention est utilisée comme support au calcul d'au moins un paramètre limitatif du fonctionnement normal du coeur du réacteur, dont la marge par rapport à une limite prédéfinie peut donc être restituée en ligne et dont la surveillance peut permettre le déclenchement d'une alarme en cas de dépassement de cette limite.

Avantageusement, le procédé de surveillance comporte une étape de déclenchement d'une alarme en salle de commande en cas de dépassement du seuil par le paramètre calculé.

Avantageusement, les paramètres limitatifs du fonctionnement normal du coeur du réacteur sont choisis parmi les paramètres suivants : puissance linéique, dit Plin, Rapport de Flux Thermique Critique, dit RFTC, déséquilibre axial de puissance, dit Dpax, déséquilibre azimutal de puissance dit Dpaz.

Les différents paramètres calculés, la distribution de puissance ou encore les marges calculées peuvent également être affichées en permanence sur un ou plusieurs écrans de la salle de commande

La présente invention a également pour objet un programme informatique comportant des moyens de programmation pour l'exécution du procédé selon l'invention lorsque le programme informatique est exécuté sur un ordinateur.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 représente schématiquement la cuve d'un réacteur à eau pressurisée illustrant la mise en oeuvre du procédé selon l'invention;
- la figure 2 est un schéma fonctionnel des différentes étapes du procédé selon l'invention;

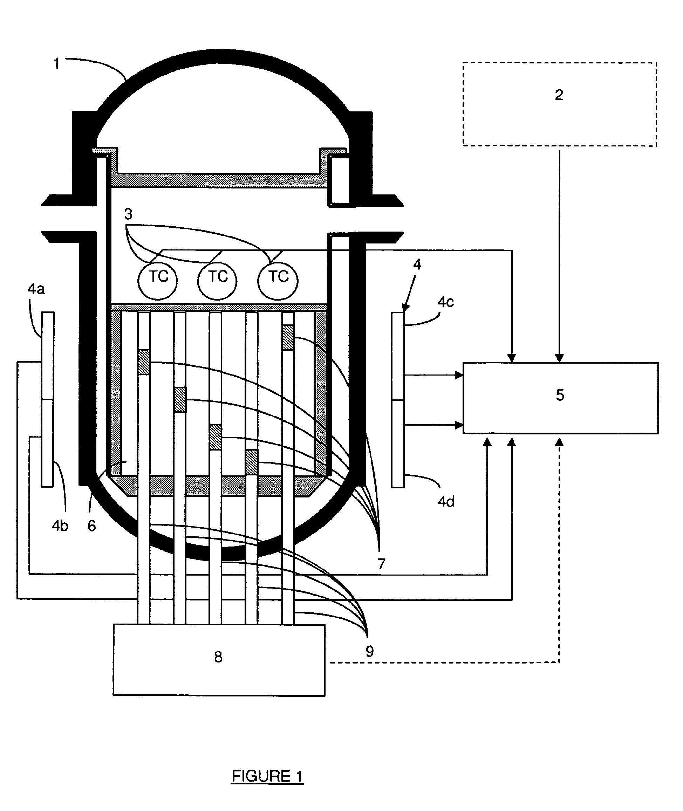

La figure 1 représente schématiquement une cuve 1 d'un réacteur à eau pressurisée.

La cuve 1 comporte un coeur 6 muni d'assemblages combustible et est équipée :
- de sondes de mesure de la température du réfrigérant (ou caloporteur) en sortie des assemblages combustible constitutifs du coeur 3 (appelées thermocouples sortie coeur).
- de chambres de mesure du flux neutronique externes au coeur 4 (appelées chambres excore).
- d'une instrumentation interne au coeur 8 constituée de sondes incore 7.

Le procédé de surveillance du coeur selon l'invention est mis en oeuvre par un dispositif programmé 5. Ce procédé de surveillance est fondé sur le calcul d'au moins un paramètre limitatif du fonctionnement normal du coeur 6 du réacteur à partir d'une distribution en trois dimensions (volumique) de la puissance courante du coeur 6, déterminée à partir d'un calcul neutronique en trois dimensions et des mesures fournies par l'instrumentation existante sur les réacteurs à eau pressurisée (REP) que sont les chambres de mesure du flux neutronique externes au coeur 4 et les thermocouples sortie coeur 3.

Les chambres excore 4 comportent plusieurs étages de mesure 4a, 4b (par exemple six, deux seulement étant représentés sur la figure 1) suivant la hauteur du coeur 6 et sont généralement disposées à la périphérie du coeur 6, en quatre positions symétriques par rapport à deux plans de symétrie axiale du coeur 6 formant entre eux un angle de 90°C. Les chambres étagées 4a à 4d des détecteurs excore permettent ainsi d'obtenir des mesures de flux neutronique à différents niveaux suivant la hauteur du coeur 6 et dans quatre zones réparties autour du coeur 6 à différents azimuts. Les chambres excore 4 fournissent donc une information de nature axiale et azimutale sur la distribution de puissance du coeur 6. On notera que la figure représente deux chambres excore 4 à deux étages, respectivement 4a-4b et 4c-4d mais qu'on utilise le plus souvent quatre chambres excore, notamment sur les réacteurs de puissance 1300 MWe (avec six étages par chambre) et de puissance 900 Mwe (avec deux étages par chambre).

Les thermocouples sortie coeur 3 forment un réseau dans le plan horizontal, c'est-à-dire perpendiculaire à la hauteur du coeur 6, et sont implantés au dessus des assemblages combustible et en regard de ces derniers. Les thermocouples sortie coeur 3 permettent ainsi d'obtenir des mesures de température du réfrigérant à la sortie de certains assemblages combustible constitutifs du coeur 6 (appelés assemblages instrumentés). La température du réfrigérant en sortie des assemblages combustible étant liée à la puissance nucléaire produite par ces assemblages, les thermocouples sortie coeur 3 fournissent donc une information de nature radiale sur la distribution de puissance du coeur 6.

Pour calibrer ces deux instrumentations 4 et 3 et faire en sorte que leur réponse soit bien représentative de ce qu'elles doivent mesurer, des mesures sont effectuées périodiquement avec une instrumentation « in-core » interne au coeur 8, constituée de sondes incore 7, qui sont généralement des chambres à fission mobiles et qui délivrent une information de mesure en trois dimensions. Les sondes incore 7 sont chacune fixées à l'extrémité d'un câble souple appelé câble téléflex assurant son déplacement à l'intérieur d'une voie de mesure 9. L'image que fournissent périodiquement les sondes incore 7 de la distribution volumique de la puissance dans le coeur 6 est appelée carte de flux.

Dans le procédé de surveillance selon l'invention, ces cartes de flux servent de base à la détermination des coefficients d'ajustement des mesures excore et thermocouples pour qu'elles soient représentatives de la distribution axiale de puissance périphérique et de la température du caloporteur en sortie des assemblages respectivement. Par distribution axiale de puissance périphérique est désignée la moyenne pondérée des distributions axiales de puissance par assemblage sur un ensemble d'assemblages à proximité de la périphérie du coeur 6. Le procédé selon l'invention peut utiliser en remplacement de cette distribution axiale de puissance périphérique, la grandeur de déséquilibre axial (dit aussi « axial offset ») périphérique désignant la moyenne pondérée des axial offset de puissance sur un ensemble d'assemblages à proximité de la périphérie du coeur 6.

Le dispositif programmé 5 pour la mise en oeuvre du procédé de surveillance du coeur selon l'invention dispose donc d'informations provenant :
- des thermocouples 3,
- des chambres excore 4,
- de l'instrumentation incore 8,

Le dispositif programmé 5 dispose également de valeurs courantes 2 des paramètres de fonctionnement du réacteur (par exemple la puissance thermique moyenne du coeur, la température d'entrée moyenne du réfrigérant dans la cuve et la position commandée des groupes de contrôle).

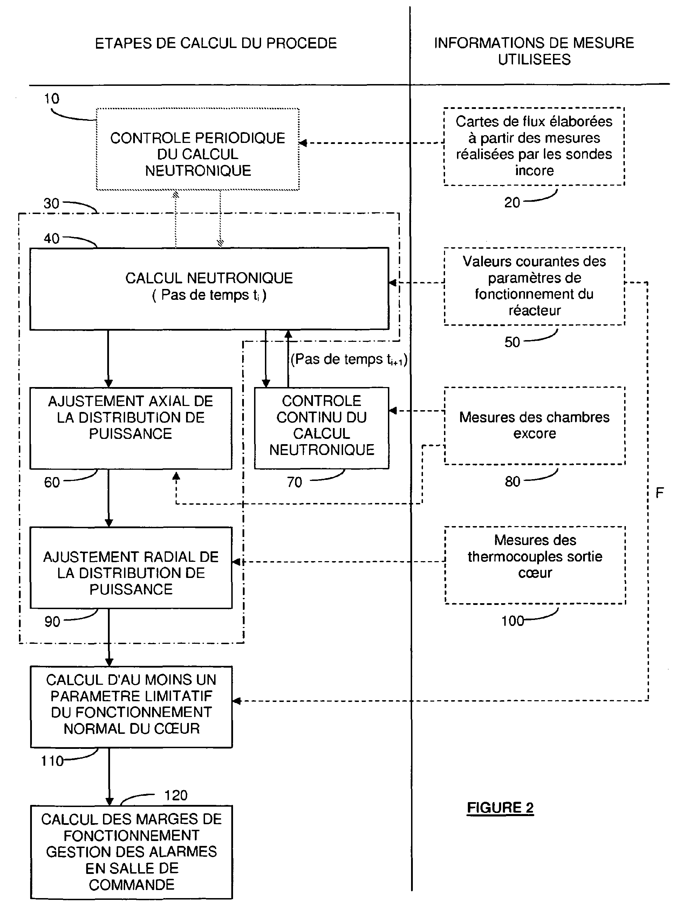

Pour décrire plus en détail le procédé de surveillance selon l'invention, un schéma fonctionnel est proposé à la figure 2 qui représente sur une première colonne l'enchaînement des étapes pour la mise en oeuvre du procédé de surveillance selon l'invention et sur une deuxième colonne les informations de mesure utilisées à chaque étape.

Les étapes regroupées dans le cadre 30 désignent les étapes du procédé de reconstruction ou de détermination de la distribution de puissance volumique (dite aussi en trois dimensions) du coeur selon l'invention.

Ce procédé de reconstruction 30 utilise les mesures excore 80 et les mesures des thermocouples 100, ajustées sur les cartes de flux au moyen de coefficients de calibrage.

Cette reconstruction de la distribution de puissance en trois dimensions 30 est fondée sur l'enchaînement d'une phase de calcul 40 de la distribution de puissance par un code de neutronique et de deux phases d'ajustement 60 et 90 de la distribution de puissance calculée sur les mesures excore 80 et thermocouples 100.

La phase de calcul de la distribution de puissance 40 met en oeuvre un code de neutronique en trois dimensions qui, à partir des valeurs courantes des paramètres de fonctionnement du réacteur 50 (par exemple la puissance thermique moyenne du coeur, la température d'entrée moyenne du réfrigérant dans la cuve et la position commandée des groupes de contrôle), actualise le bilan isotopique du coeur au cours de l'épuisement du combustible et résout en ligne l'équation de la diffusion pour restituer la distribution en trois dimensions de la puissance courante du coeur, sous la forme d'un ensemble de valeurs de la puissance nucléaire en différents points répartis dans le coeur. On peut citer à titre d'exemple le code de calcul neutronique SMART fondé sur une modélisation 3D de type nodal avancé. Les principes du calcul neutronique de coeur sont décrits plus en détail dans le document « Méthodes de calcul neutronique de coeur » (Techniques de l'ingénieur - B 3 070 - Giovanni B. Bruna et Bernard Guesdon).

La première phase d'ajustement 60 de la distribution de puissance à partir des mesures excore 80 met en oeuvre un processus mathématique destiné à rendre voisines les distributions axiales de puissance ou l'axial offset périphériques issus du calcul et les distributions axiales de puissance ou l'axial offset périphériques mesurés par les chambres excore 80 calibrées sur les cartes de flux. L'algorithme mis en oeuvre diffère selon que l'information utilisée est de type distribution axiale de puissance ou de type axial offset (ces deux termes peuvent être regroupés sous le terme générique de composante axiale de la distribution de puissance volumique).

Si l'information utilisée est du type distribution axiale de puissance, l'algorithme utilise une méthode du type des "moindres carrés" pour restituer un vecteur de N_{z} coefficients correctifs (N_{z} étant le nombre de mailles axiales du modèle de coeur à la base du code de calcul neutronique) à appliquer à la distribution axiale de puissance de chaque assemblage pour minimiser les écarts entre calcul et mesure sur la distribution axiale de puissance périphérique. Cet algorithme est appliqué pour les quatre couples (distributions axiale de puissance périphérique calculée, distribution axiale de puissance périphérique mesurée) disponibles. Quatre vecteurs de coefficients correctifs sont donc restitués, chaque vecteur étant associé à une chambre excore. La distribution axiale de puissance de chaque assemblage du coeur est ensuite corrigée par une combinaison linéaire de ces quatre vecteurs, les coefficients de cette combinaison linéaire étant corrélés à la distance de l'assemblage aux quatre chambres excore et garantissant le respect de la puissance moyenne coeur.

Si l'information utilisée est du type axial offset, l'algorithme restitue une fonction du type 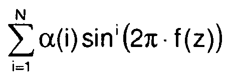 à appliquer à la distribution axiale de puissance de chaque assemblage pour minimiser l'écart entre calcul et mesure sur l'axial offset périphérique. Cette fonction peut être vue comme un vecteur de N_{z} coefficients correctifs où N_{z} est le nombre de mailles axiales du modèle de coeur à la base du code de calcul neutronique. La fonction f(z) intervenant dans la définition de cette fonction correctrice est paramétrable et prédéfinie. Les coefficients α(i) et le rang N sont obtenus par un processus itératif. Cet algorithme est appliqué pour les quatre couples (axial offset périphérique calculé, axial offset périphérique mesuré) disponibles. Quatre vecteurs de coefficients correctifs sont donc restitués, chaque vecteur étant associé à une chambre excore. La distribution axiale de puissance de chaque assemblage du coeur est ensuite corrigée par une combinaison linéaire de ces quatre vecteurs, les coefficients de cette combinaison linéaire étant corrélés à la distance de l'assemblage aux quatre chambres excore et garantissant le respect de la puissance moyenne coeur.

La seconde phase d'ajustement de la distribution de puissance 90 (à partir des mesures thermocouples 100) met en oeuvre un processus mathématique destiné à rendre voisines les puissances moyennes des assemblages instrumentés, telles que calculées par le code neutronique et telles que déduites des températures du réfrigérant mesurées en sortie de ces assemblages par les thermocouples 100 calibrés sur les cartes de flux. L'algorithme utilise une méthode de régression polynômiale en deux dimensions et restitue une fonction correctrice à appliquer à la distribution radiale de puissance pour minimiser les écarts entre calcul et mesure sur la puissance des assemblages instrumentés de thermocouples. Cette fonction correctrice peut être vue comme un ensemble de Nₐₛₛ coefficients correctifs où Nₐₛₛ est le nombre d'assemblages du coeur du réacteur nucléaire.

Ce procédé de détermination de la distribution de puissance volumique du coeur 30 selon l'invention qui vient d'être décrit comme l'enchaînement d'une phase de calcul 40 et de deux phases d'ajustement 60 et 90 est appliqué pendant le fonctionnement du réacteur nucléaire, avec une périodicité de l'ordre de 30 secondes. Toutes les 30 secondes environ, une distribution en trois dimensions de la puissance courante du coeur du réacteur est donc restituée par le procédé selon l'invention. Cette distribution de puissance peut être vue comme un ensemble de Nₐₛₛ x N_{cray} x N_{z} valeurs de puissance nucléaire en différents points répartis dans le coeur où Nₐₛₛ est le nombre d'assemblages constitutifs du coeur, N_{cray} est le nombre de crayons combustible constitutifs d'un assemblage et N_{z} est le nombre de mailles axiales du modèle de coeur à la base du code de calcul neutronique.

Cette nouvelle distribution en trois dimensions de la puissance courante du coeur est utilisée pour la mise en oeuvre du procédé de surveillance selon l'invention qui permet le calcul 110 de paramètres limitatifs du fonctionnement normal du coeur du réacteur nucléaire et en particulier des paramètres définis ci-dessous :
- Plin : Puissance linéique, c'est-à-dire la puissance par unité de longueur des éléments combustible du coeur,
- RFTC : Rapport de Flux Thermique Critique représentatif de l'écart des conditions thermohydrauliques du réfrigérant par rapport à une situation d'ébullition critique,
- Dpax : Déséquilibre axial de puissance dans le coeur (ou axial offset de puissance),
- Dpaz : Déséquilibre azimutal de puissance dans le coeur (ou tilt de puissance).

Les paramètres limitatifs du fonctionnement normal du coeur calculés par le procédé de surveillance selon l'invention sont comparés à des valeurs limites définies dans les études de sûreté. Cette comparaison permet de calculer des marges (étape 120) par rapport aux valeurs limites et éventuellement d'élaborer, en cas de franchissement d'une valeur limite, un signal d'alarme dans la salle de commande du réacteur nucléaire. On notera que le calcul de certains paramètres limitatifs peut nécessiter la connaissance des valeurs courantes des paramètres de fonctionnement du réacteur 50 qui ne constituent pas des données d'entrée directes nécessaires au calcul neutronique 40 (d'où la présence de la flèche F) : c'est le cas par exemple du RFTC qui nécessite la connaissance du débit et de la pression qui ne sont pas nécessairement des données d'entrée du calcul neutronique 40. Les différents paramètres calculés, la distribution de puissance ou encore les marges calculées peuvent également être affichées en permanence sur un ou plusieurs écrans de la salle de commande.

Le procédé de reconstruction 30 selon l'invention, tel qu'il a été décrit jusque là, permet de calculer en ligne une distribution de puissance selon l'étape 40 et de l'ajuster selon les étapes 60 et 90 pour réduire au maximum les écarts par rapport aux mesures excore 80 et thermocouples 100, représentatives de la distribution de puissance réelle du coeur au moment du calcul. Cette distribution de puissance calculée, une fois ajustée sur les mesures, est donc représentative des spécificités physiques du coeur au moment du calcul et sert de support au calcul 110 de paramètres limitatifs du fonctionnement normal du coeur pour lesquels les marges vis-à-vis de valeurs limites prédéfinies peuvent ensuite être évaluées selon l'étape 120.

La précision de la distribution de puissance ajustée, c'est-à-dire sa conformité à la distribution de puissance réelle du coeur, nécessite un contrôle des écarts entre calcul et mesure utilisés dans les phases d'ajustement de la distribution de puissance 60 et 90. En effet, lorsque les écarts entre calcul et mesure sont en dehors d'une certaine gamme où l'efficacité des processus d'ajustement de la distribution de puissance est optimale, la précision de la distribution de puissance ajustée se dégrade. Pour maintenir les écarts entre calcul et mesure dans la gamme d'efficacité optimale des processus d'ajustement de la distribution de puissance 60 et 90, le procédé de détermination de la distribution de puissance volumique du coeur 30 selon l'invention prévoit la possibilité d'agir sur le calcul de deux façons distinctes :
- un contrôle continu du calcul neutronique 70,
- un contrôle périodique du calcul neutronique 10.

L'objectif du contrôle continu du calcul neutronique 70 est d'optimiser la représentation par le code neutronique de phénomènes transitoires ayant un impact direct sur la distribution de puissance du coeur, notamment les oscillations de la distribution de xénon dans le coeur du réacteur. Ce mode de contrôle est implémenté en ligne dans le procédé selon l'invention et peut donc être sollicité avec la même périodicité que celle propre au processus de reconstruction de la distribution de puissance 30 selon l'invention décrit plus haut (environ 30 secondes). Il s'agit d'un processus itératif qui repose sur une modification de la valeur d'un ou plusieurs paramètre(s) de fonctionnement utilisé(s) en entrée du calcul neutronique 50 (par exemple la puissance thermique moyenne du coeur, la température d'entrée moyenne du réfrigérant dans la cuve ou la position commandée des groupes de contrôle). À chaque pas de temps de calcul tᵢ, l'axial offset périphérique de la distribution de puissance calculée (mais non encore ajustée sur la mesure) est comparé à l'axial offset périphérique mesuré par les chambres excore 80. Si l'écart entre calcul et mesure sur l'axial offset périphérique ne satisfait pas un critère prédéfini, une modification de la valeur d'un ou plusieurs paramètre(s) de fonctionnement 50 est effectuée et un nouveau calcul neutronique est réalisé par le code avec la valeur modifiée de ce ou ces paramètre(s). En d'autres termes, on force donc la valeur d'un ou plusieurs paramètres de fonctionnement à une valeur qui n'est pas nécessairement représentative de la réalité. Cette opération est répétée jusqu'à satisfaction du critère sur l'écart entre calcul et mesure sur l'axial offset périphérique. Lorsque cette itération s'achève, la distribution de puissance est dite contrôlée. Cette distribution de puissance contrôlée est utilisée comme condition initiale pour le calcul neutronique au pas de temps suivant tᵢ₊₁. Il convient de noter que ce processus de contrôle 70 de la distribution de puissance calculée opère en parallèle du processus de reconstruction 30 décrit plus haut. Autrement dit, l'ajustement sur les mesures 60 et 90 inhérent au processus de reconstruction 30 est réalisé sur la distribution de puissance calculée avec les valeurs non modifiées des paramètres de fonctionnement 50 utilisés en entrée du calcul neutronique 40, c'est-à-dire représentatives de la réalité.

L'objectif du contrôle périodique du calcul neutronique 10 est d'optimiser la représentation par le code neutronique de phénomènes stationnaires où à cinétique d'évolution lente et ayant un impact direct sur la distribution de puissance du coeur, notamment les déséquilibres d'épuisement ou de modération à l'intérieur du coeur du réacteur nucléaire. Ce mode de contrôle repose sur l'utilisation des cartes de flux obtenues périodiquement à partir des mesures réalisées par les sondes incore 20. Ce mode de contrôle peut donc être sollicité avec la même périodicité que celle propre aux cartes de flux (typiquement de l'ordre du mois). Il s'agit d'un processus itératif qui repose sur une modification des paramètres intrinsèques au modèle de coeur en trois dimensions à la base du code de calcul neutronique. On entend par paramètres intrinsèques au modèle de coeur les paramètres intervenant dans l'équation de la diffusion. Ces paramètres sont ainsi modifiés de façon itérative jusqu'à satisfaction d'un critère sur les écarts entre la distribution de puissance calculée par le code et la distribution de puissance correspondant à la carte de flux. Un recalage du code neutronique sur la carte de flux est donc réalisé périodiquement de cette façon. Entre deux recalages consécutifs du code neutronique (distants d'un mois environ), les calculs neutroniques effectués à chaque pas de temps pour le processus de reconstruction 30 ou le processus de contrôle continu 70 décrits auparavant utilisent les valeurs modifiées des paramètres intrinsèques au modèle de coeur, telles qu'obtenues lors du dernier recalage effectué.

Les deux méthodes de contrôle du calcul neutronique 10 et 70 mises en oeuvre dans le procédé selon l'invention permettent donc de garantir un certain niveau de conformité de la distribution de puissance calculée à la distribution de puissance réelle du coeur. Ce niveau de conformité entre les distributions de puissance calculée et réelle est nécessaire au maintien des performances du processus de reconstruction de la distribution de puissance 30 quels que soient les transitoires de fonctionnement normal auxquels le réacteur est soumis (suivi de charge, téléréglage ou fonctionnement prolongé à puissance réduite par exemple) ou les spécificités physiques du coeur (déséquilibres d'épuisement du combustible ou de modération par exemple). Le processus de reconstruction de la distribution de puissance 30 agit alors comme un ajustement fin de la distribution de puissance sur les mesures continues fournies par l'instrumentation excore 80 et l'instrumentation thermocouples 100. Cette action mixte sur le calcul neutronique des contrôles 10 et 70 d'une part et des ajustements 60 et 90 d'autre part fonde respectivement la robustesse et la précision de la surveillance des conditions pré-accidentelles du coeur du réacteur réalisée par le procédé selon l'invention.

Bien entendu, l'invention n'est pas limitée au mode de réalisation qui vient d'être décrit. Ainsi, l'invention a été décrite pour quatre chambres excore mais le nombre de chambres peut varier.

En outre, même si l'invention a été plus particulièrement décrite dans le cas d'un réacteur à eau pressurisée elle pourrait s'appliquer à tout type de réacteur comportant un coeur muni de sondes de mesure de température et d'une instrumentation excore.

On pourra remplacer tout moyen par un moyen équivalent.

## Revendications

1. Procédé de détermination (30) de la distribution de puissance volumique du coeur d'un réacteur nucléaire mis en oeuvre par un dispositif programmé, ledit coeur comprenant une pluralité d'assemblages combustible en utilisant un ensemble de détecteurs de mesure de flux neutronique disposés à l'extérieur de la cuve du réacteur et un ensemble de sondes de mesure de la température du caloporteur à la sortie desdits assemblages combustible, ledit procédé (30) comportant les étapes suivantes :
- détermination, au pas de temps tᵢ, d'une première distribution de puissance volumique en utilisant un code de calcul neutronique (40) résolvant instantanément l'équation de la diffusion et actualisant le bilan isotopique du coeur au cours de l'épuisement du combustible, à partir de valeurs de paramètres de fonctionnement du réacteur,
- détermination, au pas de temps tᵢ, d'une nouvelle distribution de puissance volumique par ajustement (60, 90) de ladite première distribution de puissance volumique avec des mesures délivrées par lesdits détecteurs de mesure de flux neutronique disposés à l'extérieur de la cuve du réacteur (80) et lesdites sondes de mesure de température (100),
- contrôle continu (70) dudit calcul neutronique, ledit contrôle comprenant les étapes suivantes :
o calcul, au pas de temps tᵢ, de la distribution de la puissance volumique courante du coeur à partir de valeurs de paramètres caractérisant le fonctionnement courant du réacteur,
o calcul, au pas de temps tᵢ, d'une nouvelle distribution de puissance volumique après ajustement d'au moins un paramètre caractérisant le fonctionnement courant du réacteur pour minimiser l'écart entre le calcul et la mesure du déséquilibre axial de puissance moyenné sur un ensemble d'assemblages en périphérie du coeur,
o utilisation de ladite nouvelle distribution de puissance issue du calcul précédent, comme condition initiale du calcul neutronique au pas de temps suivant tᵢ₊₁.

2. Procédé de détermination (30) de la distribution de puissance volumique du coeur selon la revendication 1 **caractérisé en ce que** ladite étape de détermination d'une nouvelle distribution de puissance comprend les étapes suivantes :
- une première étape d'ajustement (60) de ladite première distribution de puissance calculée, ledit ajustement étant réalisé par une fonction mathématique minimisant les écarts entre la composante axiale de ladite distribution de puissance calculée et les mesures délivrées par lesdits détecteurs de mesure de flux neutronique disposés à l'extérieur de la cuve (80),
- une deuxième étape d'ajustement (90) de ladite première distribution de puissance calculée, ledit ajustement étant réalisé par une fonction mathématique minimisant les écarts entre la composante radiale de ladite distribution de puissance calculée et les mesures délivrées par lesdites sondes de mesure de température (100).

3. Procédé de détermination de la distribution de puissance volumique du coeur selon l'une des revendications précédentes **caractérisé en ce qu'**il comporte une étape de correction périodique (10) comprenant une étape de modification des paramètres intrinsèques au modèle de coeur, c'est à dire le paramètres intervenant dans l'équation de diffusion, pour minimiser les écarts entre la distribution de puissance volumique calculée par ledit code neutronique et la distribution de puissance volumique déduite des mesures (20) fournies par des détecteurs de mesure de flux neutronique à l'intérieur de la cuve du réacteur, dits sondes incore.

4. Procédé de surveillance d'au moins un paramètre limitatif du fonctionnement normal du coeur d'un réacteur nucléaire comportant les étapes suivantes :
- Mise en oeuvre du procédé de détermination (30) de la distribution de puissance volumique dudit coeur selon l'une des revendications 1 à 3,
- Calcul d'au moins un paramètre limitatif (110) du fonctionnement normal du coeur du réacteur à partir de cette nouvelle distribution de puissance volumique du coeur,
- Calcul de l'écart (120) dudit paramètre calculé par rapport à un seuil prédéterminé.

5. Procédé de surveillance selon la revendication 4 **caractérisé en ce qu'**il comporte une étape de déclenchement d'une alarme en salle de commande en cas de dépassement dudit seuil par le paramètre calculé.

6. Procédé de surveillance selon l'une des revendications 4 ou 5 **caractérisé en ce que** ledit au moins un paramètre limitatif du fonctionnement normal du coeur du réacteur est un des paramètres suivants : puissance linéique, dit Plin, Rapport de Flux Thermique Critique, dit RFTC, déséquilibre axial de puissance, dit Dpax, déséquilibre azimutal de puissance dit Dpaz.

7. Procédé de surveillance selon l'une des revendications 4 à 6 **caractérisé en ce que** ledit au moins paramètre calculé, la nouvelle distribution de puissance ou l'écart calculé sont affichés en permanence sur au moins un écran de la salle de commande.

8. Programme informatique pour l'exécution du procédé suivant l'une quelconque des revendications 1 à 7.

## Claims

1. A method (30) for determining the three-dimensional power distribution of a nuclear reactor core implemented by a programmed device, said core comprising a plurality of fuel assemblies, using a set of neutron flux measuring detectors disposed outside the reactor vessel and a set of probes measuring the temperature of a coolant at the outlet from said fuel assemblies, said method (30) comprising the following steps:
• determining, at a time step tᵢ, a first three-dimensional power distribution by using a neutronic calculation code (40) instantaneously solving the diffusion equation and updating the isotopic balance of the core during fuel depletion, from values for operational parameters of the reactor;
• determining, at a time step tᵢ, a new three-dimensional power distribution by adjusting (60, 90) said first three-dimensional power distribution with measurements delivered by said neutron flux measuring detectors disposed outside the reactor vessel (80) and said temperature measuring probes (100); and
• continuously controlling (70) said neutronic calculation, said control comprising the following steps:
• calculating, at time step ti, the current three-dimensional power distribution of the core from values of parameters characterizing the current operation of the reactor;
• calculating, at time step ti, a new three-dimensional power distribution after adjusting at least one parameter characterizing the current operation of the reactor in order to minimize the discrepancy between the calculation and the measurement of an axial power imbalance averaged over a set of assemblies at the periphery of the core; and
• using said new power distribution obtained from the previous calculation as an initial condition for the neutronic calculation at the following time step tᵢ₊₁.

2. The method (30) for determining three-dimensional power distribution as claimed in claim 1, **characterized in that** said step for determining a new power distribution comprises the following steps:
• a first step (60) for adjusting said first calculated power distribution, said adjustment being carried out by means of a mathematical function minimizing the discrepancies between the axial component of said calculated power distribution and the measurements delivered by said neutron flux measuring detectors disposed outside the vessel (80); and
• a second step (90) for adjusting said first calculated power distribution, said adjustment being carried out by means of a mathematical function minimizing the discrepancies between the radial component of said calculated power distribution and the measurements delivered by said temperature measuring probes (100).

3. The method for determining the three-dimensional power distribution of the core as claimed in one of the preceding claims, **characterized in that** it comprises a periodic correction (10) comprising a step for modifying intrinsic parameters of the core model, i.e. the parameters involved in the diffusion equation, in order to minimize the discrepancies between the three-dimensional power distribution calculated by said neutronic code and the three-dimensional power distribution deduced from measurements (20) provided by the neutron flux measuring detectors inside the reactor vessel known as in-core probes.

4. A method for monitoring at least one limiting parameter of normal operation of a core of a nuclear reactor, comprising the following steps:
• carrying out the method (30) for determining the three-dimensional power distribution of said core as claimed in one of claims 1 to 3;
• calculating at least one limiting parameter (110) of normal operation of the reactor core from this new three-dimensional power distribution of the core;
• calculating the discrepancy (120) between said calculated parameter and a predetermined threshold.

5. The monitoring method as claimed in claim 4, **characterized in that** it comprises a step for triggering a control room alarm in the event of the threshold being exceeded by the calculated parameter.

6. The monitoring method as claimed in claim 4 or claim 5, **characterized in that** said at least one limiting parameter of normal operation of the reactor core is one of the following parameters: linear power, known as Plin, critical heat flux ratio, known as DNBR, axial power imbalance, known as Dpax, and azimuthal power imbalance, known as Dpaz.

7. The monitoring method as claimed in one of claims 4 to 6, **characterized in that** said at least one calculated parameter, the new power distribution or the calculated discrepancy are continuously displayed on at least one control room screen.

8. A computer program for executing the method as claimed in any one of claims 1 to 7.

## Patentansprüche

1. Verfahren zur Bestimmung (30) der Verteilung der Leistungsdichte des Kerns eines Kernreaktors, das von einer programmierten Vorrichtung durchgeführt wird, wobei der Kern mehrere Brennelementbündel umfasst, indem ein Satz Detektoren zur Messung des Neutronenflusses, die außerhalb des Behälters des Reaktors angeordnet sind, und ein Satz Sonden zur Messung der Temperatur des Kühlmittels am Austritt der Brennelementbündel verwendet werden, wobei das Verfahren (30) die folgenden Schritte umfasst:
- Bestimmung - im Zeitschritt tᵢ - einer ersten Verteilung der Leistungsdichte, indem ein Neutronenberechnungscode verwendet wird (40), wodurch die Diffusionsgleichung augenblicklich gelöst wird und die Isotopenbilanz des Kerns im Verlauf der Erschöpfung des Brennstoffs mithilfe von Werten von Betriebsparametern des Reaktors aktualisiert wird,
- Bestimmung - im Zeitschritt tᵢ - einer neuen Verteilung der Leistungsdichte durch Anpassung (60, 90) der ersten Verteilung der Leistungsdichte aus Messwerten, die von den Detektoren zur Messung des Neutronenflusses, die außerhalb des Behälters des Reaktors angeordnet sind (80), und den Temperaturmesssonden (100) geliefert werden,
- kontinuierliche Kontrolle (70) der Neutronenberechnung, wobei das Kontrollieren die folgenden Schritte umfasst:
o Berechnung - im Zeitschritt tᵢ - der Verteilung der aktuellen Leistungsdichte des Kerns aus Werten von Parametern, die den aktuellen Betrieb des Reaktors kennzeichnen,
o Berechnung - im Zeitschritt tᵢ - einer neuen Verteilung der Leistungsdichte nach Anpassung mindestens eines Parameters, der den aktuellen Betrieb des Reaktors kennzeichnet, um die Abweichung zwischen der Berechnung und der Messung des axialen Leistungsungleichgewichts, das über einen Satz Bündel am Rand des Kerns gemittelt wird, zu minimieren,
o Verwendung der neuen Leistungsverteilung, die von der vorherigen Berechnung stammt, als Anfangsbedingung der Neutronenberechnung im anschließenden Zeitschritt tᵢ₊₁.

2. Verfahren zur Bestimmung (30) der Verteilung der Leistungsdichte des Kerns nach Anspruch 1, **dadurch gekennzeichnet, dass** der Schritt der Bestimmung einer neuen Leistungsverteilung die folgenden Schritte umfasst:
- einen ersten Schritt des Anpassens (60) der ersten berechneten Leistungsverteilung der Leistungsdichte, wobei die Anpassung durch eine mathematische Funktion umgesetzt wird, die die Abweichungen zwischen der axialen Komponente der berechneten Leistungsverteilung und den Messwerten, die von den Detektoren zur Messung des Neutronenflusses, die außerhalb des Behälters des Reaktors angeordnet sind, geliefert werden (80), minimiert,
- einen zweiten Schritt des Anpassens (90) der ersten berechneten Leistungsverteilung der Leistungsdichte, wobei die Anpassung durch eine mathematische Funktion umgesetzt wird, die die Abweichungen zwischen der radialen Komponente der berechneten Leistungsverteilung und den Messwerten, die von den Temperaturmesssonden geliefert werden (100), minimiert.

3. Verfahren zur Bestimmung der Verteilung der Leistungsdichte des Kerns nach einem der vorhergehenden Ansprüche, **dadurch gekennzeichnet, dass** es einen periodischen Korrekturschritt (10) umfasst, der einen Schritt des Modifizierens von Parametern, die dem Kernmodell eigen sind, d. h. Parameter, die in die Diffusionsgleichung eingreifen, umfasst, um die Abweichungen zwischen der Verteilung der Leistungsdichte, die durch den Neutronencode berechnet wird, und der Verteilung der Leistungsdichte, die von den Messwerten abgeleitet wird (20), die von den Detektoren zur Messung des Neutronenflusses im Inneren des Behälters des Reaktors, den so genannten Kern-Sonden, geliefert werden, zu minimieren.

4. Verfahren zur Überwachung mindestens eines den Normalbetrieb des Kerns eines Kernreaktors einschränkenden Parameters, wobei das Verfahren die folgenden Schritte umfasst:
- Durchführung des Verfahrens zur Bestimmung (30) der Verteilung der Leistungsdichte des Kerns nach einem der Ansprüche 1 bis 3,
- Berechnung mindestens eines den Normalbetrieb des Kerns des Reaktors einschränkenden Parameters (110) aus dieser neuen Verteilung der Leistungsdichte des Kerns,
- Berechnung der Abweichung (120) des berechneten Parameters in Bezug auf einen vorherbestimmten Schwellwert.

5. Überwachungsverfahren nach Anspruch 4, **dadurch gekennzeichnet, dass** es einen Schritt des Auslösens eines Alarms im Kommandoraum im Falle eines Überschreitens des Schwellwerts durch den berechneten Parameter umfasst.

6. Überwachungsverfahren nach einem der Ansprüche 4 oder 5, **dadurch gekennzeichnet, dass** der mindestens eine den Normalbetrieb des Kerns des Reaktors einschränkende Parameter einer der folgenden Parameter ist: lineare Leistung, die so genannte Plin, Quotient des kritischen Wärmeflusses, der so genannte RFTC, axiales Leistungsungleichgewicht, das so genannte Dpax, azimutales Leistungsungleichgewicht, das so genannte Dpaz.

7. Überwachungsverfahren nach einem der Ansprüche 4 bis 6, **dadurch gekennzeichnet, dass** der mindestens eine berechnete Parameter, die neue Leistungsverteilung oder die berechnete Abweichung ständig auf mindestens einem Bildschirm im Kommandoraum angezeigt wird.

8. Computerprogramm zur Ausführung des Verfahrens nach einem der Ansprüche 1 bis 7.
